Europäisches Patentamt

European Patent Office

Office européen des brevets

(19)

(11) **EP 1 701 466 A1**

(12) **EUROPEAN PATENT APPLICATION**

(43) Date of publication:
**13.09.2006 Bulletin 2006/37**

(51) Int Cl.:
*H04L 1/24* (2006.01)   *H04B 17/00* (2006.01)

(21) Application number: **05368008.8**

(22) Date of filing: **09.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Institut Eurecom**
**06904 Sophia-Antipolis (FR)**

(72) Inventors:
• **Slock, Dirk**
**06220 Vallauris (FR)**

• **Guillaud, Maxime**
**06600 Antibes (FR)**
• **Knopp, Raymond**
**06370 Mouans Sartoux (FR)**

(74) Representative: **Schuffenecker, Thierry**
**120 Chemin de la Maure**
**06800 Cagnes sur Mer (FR)**

(54) **Process for estimating the channel state in a transmitter of a digital communication system and apparatus for doing the same**

(57)

1. Process for determining the channel characteristics in a digital communication system comprising a first Communication Unit (CUA 100) and a second Communication Unit B (200) communicating through a transmission medium (140). The first unit 100 includes a first signal signal processor (110), and at least one first conversion and RF module (120) and a first antenna (130). The second unit (200) includes a second signal processor (170), and at least one second conversion and RF module (160) and at least one second antenna (150). The process comprises the steps of:

- executing a first loop based on the successive transmission of a first training information generated by said first unit (100) and the retransmission of a feedback signal combined with a second training information generated by said second unit (200) back to said first unit (100) in order to let said first unit compute relationship characteristics $(P_A, P_B)$ between the transfer function of said first and second conversion and RF modules (120, 160);
- upon completion of said first loop, executing a second loop for the purpose of continuously deriving the knowledge of the $G$ channel within the emitter of said first Unit (100) from the sole knowledge of the estimated $H$ channel together with said relationship characteristics $(P_A, P_B)$.

Fig. 3

**EP 1 701 466 A1**

**Description**

**Technical field of the invention**

The invention relates to wireless communications and more particularly to a process for estimating the channel state in the transmitter of a digital communication system.

**Background art**

Wireless communications are constantly developing, providing new services and products, including digital cellular, wireless local loop and satellite systems.

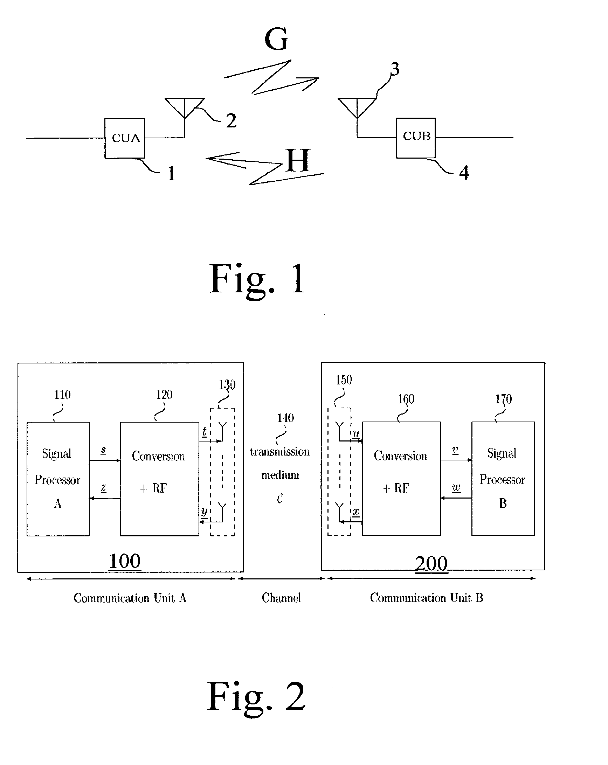

Figure 1 shows a wireless communication between a first communication unit 1 - called Communication Unit A (CUA) - fitted with at least one antenna 2, and a second communication unit 4 - called Communication Unit B - having at least one antenna 3.

There is a clear interest, for the transmitting part of each unit, to be able to estimate the transfer function of the channel. The transmit part of unit 1 should therefore be capable of estimating the transfer function $\mathcal{G}$ of the communication channel between A and B and, conversely the transmit part of unit 4 should be able to estimate the transfer function $\mathcal{H}$ between B and A.

The estimation of the channel transfer function is generally achieved by means of training sequences which are exchanged between the two communicating units. Therefore, by receiving a predetermined sequence - and assumed known to each other, - the receiver or receiving part of each unit (eg . unit A) is being capable of estimating the channel characteristics of the communication channel.

Therefore, communication unit A receives the knowledge $\mathcal{H}$ - or more precisely an estimation - of the transfer function of the link in the reverse direction (ie between unit B and unit A) while, conversely, communication unit B receives the knowledge $\mathcal{G}$, or an estimation thereof, of the channel in the direct direction.

Providing the two transmitters with the knowledge - or an estimation of - the direct transfer function is most useful since it permits to avoid dispersion of the energy through the different antennas (when multiple antennas are used) or to focus more energy in some privileged directions corresponding to the physical location of the other communicating unit. Moreover, when multiples users are communicating via the wireless channel, they should avoid to spoil each other's links and, therefore, it is still highly desirable to be able to focus the electromagnetic energy towards the right direction, and thus the right antennas.

Therefore, it can be seen that there is a clear advantage for every transmitter - e.g. transmitter of unit A - to have the estimation of the direct channel (e.g. channel $\mathcal{G}$). However, that information is available at the other side of the wireless communication link since the channel transfer function is evaluated in the receiving part of the station receiving the predetermined training sequence. Generally speaking, to give the emitter of one station - eg station A - the knowledge of the transfer function $\mathcal{G}$ of the channel, it is required to arrange a feedback loop to return that information to the station A. That feedback loop is based on the re-encoding of the information characteristics of the channel $\mathcal{G}$ and its re-transmission back to the station A through the digital comunication system.

This consumes part of the communication resources of the system and generates a traffic which can not be used for transporting user data.

Moreover, such consumption of resources is not negligible for the following two reasons.

Firstly, the volume of the information characterizing the channel $\mathcal{G}$ increases as the number of antennas increases in the wireless communication system. This requires higher traffic in the feedback loop.

Secondly, and this is critical, since the wireless communication link is constantly changing, there is a constant need to forward the estimation of the channel $\mathcal{G}$ to the station A (for instance).

This results in a constant waste of the data rate of the wireless communication link in order to give the emitter of one station the opportunity to know the coefficients of the communication channel that were estimated by the other station.

It is highly desirable to improve the situation and to provide an alternate solution for determining, for instance, the transfer function $\mathcal{G}$ useful for the emitter of unit A.

Such is the problem solved by the present invention.

**Summary of the invention**

It is an object of the present invention to permit the emitter of a digital communication unit to continuously compute the estimation of the channel $\mathcal{G}$ from the sole estimation of the channel $\mathcal{H}$ .

It is a further object of the present invention to provide a new process for determining the channel state within the emitter based on the sole knowledge of the channel in the reverse direction.

The technical problem is solved by the process of the invention which permits determination of the channel state $\mathcal{G}$ in a digital communication system comprising a first Communication Unit A (CUA) and a second Communication Unit B (CUB) communicating through a transmission medium. The first unit CUA includes a first signal signal processor, a first conversion and RF module and at least one first antenna and, similarly, the second CUB includes a second signal processor, a second conversion and RF module and at least one second antenna.

The process of determination of the channel $\mathcal{G}$ by CUA is based on the execution of two loops:

A first loop comprises the successive transmission of a first training sequence generated by CUA and received by CUB, then followed by a retransmission by unit CUB of a feedback signal combined with a second training sequence in order to let CUA compute relationship characteristics ($\mathcal{P}_A$, $\mathcal{P}_B$) representative of the transfer function of the first and second conversion and RF modules.

Upon completion of the first loop, then the process comprises a second loop which achieves continuous computation of the $\mathcal{G}$ channel within the emitter of unit CUA from the sole knowledge of the estimated $\mathcal{H}$ channel together with said relationship characteristics ($\mathcal{P}_A$, $\mathcal{P}_B$).

The process is very efficient since it does not require absolute knowledge of the transfer function of the conversion and RF modules located in the two communicating units. Further, since the relationship characteristics ($\mathcal{P}_A$, $\mathcal{P}_B$) are relatively stable with respect to the rapidly changing characteristics of the transmission medium, the second loop allows easy computation of the channel $\mathcal{G}$ from the sole knowledge of the $\mathcal{H}$ channel, without requiring consuming non necessary traffic of data.

In one embodiment, the first loop comprises the estimation of the channel $\mathcal{G}$ from said first training sequence within unit CUB, followed by a feedback of the estimated coefficients based on the quantification, re-encoding and retransmission of said information back to unit CUA.

In an alternate embodiment, the feedback signal is directly conveyed towards CUA via a linear analog communication without requantification and re-encoding.

Preferably, the first loop is executed at regular intervals in order to periodically update the knowledge of the relationship characteristics.

The invention also provides a communication apparatus including a first signal processor, and at least one first conversion and RF module and a first antenna being capable of communication with a second unit (CUB) which also includes a second signal processor, and at least one second conversion and RF module and a second antenna, through a transmission medium.

In accordance with the invention, the apparatus includes:

- means for executing a first loop based on the successive transmission of a first training sequence to said second unit CUB ;
- means for receiving from said second unit a feedback signal combined with a second training sequence generated
- means for computing from said feedback signal relationship characteristics ($\mathcal{P}_A$, $\mathcal{P}_B$) between the transfer function of said first and second conversion and RF modules ;

- **-** means for executing a second loop upon completion of said first loop for continuously deriving the knowledge of the $\mathcal{G}$ channel from the sole knowledge of the estimated $\mathcal{H}$ channel together with said relationship characteristics ($\mathcal{P}_A$, $\mathcal{P}_B$).

### Description of the drawings

An embodiment of the invention will now be described, by way of example only, with reference to the accompanying drawings, wherein:

Figure 1 illustrates a basic wireless communication

Figure 2 illustrates the basic components of a communication apparatus adapted to carry out the process of the present invention.

Figure 3 illustrates the preferred embodiment of the process of the invention

Figure 4 details the conversion and RF module of CUA in a preferred embodiment

Figure 5 illustrates the wireless channel between the M antennas of CUA and the N antennas of CUB.

Figure 6 represents the conversion and RF module of CUB in the preferred embodiment.

Figure 7 depicts the transmission from CUA to CUB.

### Description of the preferred embodiments of the invention

With respect to **figure 2**, there is now described the general architecture of two communicating units, namely a first Communication Unit A (CUA) 100 and a second Communication Unit B (CUB) 200 which are well adapted to embody the process of the invention.
Communication unit A 100 comprises a first signal processor 110, a first Conversion and RF module 120 and a set of antennas 130. Similarly, Communication Unit 200 comprises a second signal processor 170, a second Conversion and RF module 160 and a second set of antennas 150.
The two communication Units A and B are communicating through a transmission medium (which transfer function is denoted *C*) which is rapidly changing in response to any change brought to the environment condition of the wireless communication.
The invention takes advantage of an observation made on a clear distinction between the following essentials parts of the channel (generically denoted $\mathcal{G}$ in the direct direction and $\mathcal{H}$ in the reverse direction) :

a) - part of the channel included within the emitter, located between the signal processor comprising the downstream electronics components down to the duplexer;
b) - part of the channel comprising the emitting antenna, the true wireless transmission medium, and the receiving antenna;
c) part of the channel included within the receiver, between the duplexer and comprising the downstream electronics down to the digital signal processor;

It was observed that the transfer functions of part (a) and (c) are relatively stable or, in other words, are changing slowly with respect to part (b) which is highly dependent on the environment conditions of the channel. Indeed, regarding parts (a) and (b) those are only dependent on slowly changing elements such as the structure of the electronic circuits, the temperature of the integrated circuits, etc...). Therefore, the relationship between those transfer function are also slowly changing.
Conversely, regarding part (b), it was observed that the transfer function *C* is rapidly changing in response to the environmental conditions of the wireless communication. In the case of a mobile equipment, such as a mobile telephone, this depends on many factors, such as whether or not the mobile is being moved, whether its operator is changing the way he/she is holding it etc...

The invention is based on that distinction, between part of the communication channel which is rapidly changing and part of the communication channel which can be considered as being relatively stable.

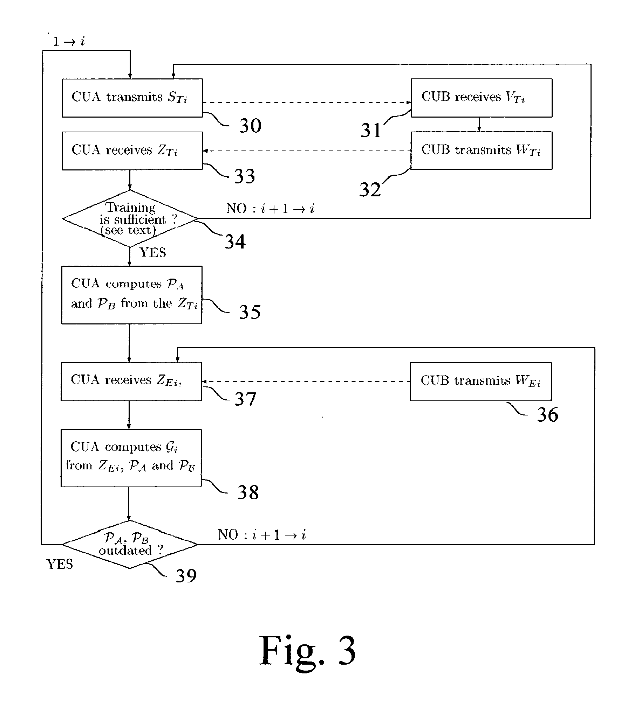

The process of the invention comprises the following steps, which will be described in more detail in figure 3:

- performing a first - slowly evolving - loop for the purpose of deriving a first relationship between the transfer functions of parts a) and c) in the communication link,
- then using said relationship for the purpose of executing a second loop which is used for continuously computing within station A the transfer function $\mathcal{G}$ of the channel from the sole estimation of the $\mathcal{H}$ characteristics (available in station A).

Therefore, based on that process, it is no longer needed to continuously arrange the feedback loop between CUB and CUA so as to provide the latter with the knowledge of the rapidly evolving channel $\mathcal{G}$.

In addition, since it is not necessary to individually determine the transfer function of parts a) and c), but only their relationship, it can be seen that there is no need to perform any absolute calibration process for the purpose of a precise determination of the channel characteristics of the electronics circuitry.

The invention is only based on the relative calibration of the different transfer function of parts a) and c) in order to provide an efficient, and simple, process for automatically computing channel $\mathcal{G}$ from the knowniedge of $\mathcal{H}$.

Referring back to figure 2, it is assumed that antenna array 130 comprises M antennas while antenna array 150 includes N antennas. In a general sense, one will consider under the term "the channel" 140 the electromagnetic characteristics of the propagation environment between the antennas of CUA 100 and CUB 200.

When transmission takes place from CUA 100 to CUB 200, $\underline{s}$ denotes the representation of the signal sent by the signal processor 110 to the Conversion and RF Module A 120. After being modulated to radio frequency and amplified, the signal is transmitted by the antenna array 130. It is received by the antena array 150 of CUB 200 after having gone through the transmission medium 140 (which electromagnetic properties are formally represented by C). After demodulation, filtering and analog-to-digital conversion by Conversion and RF Module 160, a signal represented by $\underline{v}$ is passed to the signal processor 170 for further processing.

When transmission takes place from CUB 200 to CUA 100, $\underline{w}$ denotes the representation of the signal sent by signal processor 170 of unit 200, which signal is sent to the Conversion and RF module 160. After being modulated to radio frequency (RF) and amplified, the signal is transmitted by the antenna array 150 of CUB 200. It is received by antenna array 130 of CUA 100 after going through the transmission medium 140. After demodulation, filtering and analog-to-digital conversion by Conversion and RF Module 120, a signal represented by $\underline{z}$ is passed to the signal processor 110 of CUA 100 for further processing.

Since the channel can adversely affect the signal that it carries, we denote by $\mathcal{G}$ a set of channel characteristics sufficient to make $\underline{v}$ a deterministic function $f_1$ of $\underline{s}$ and $\mathcal{G}$, and $\mathcal{H}$ a set of channel characteristics sufficient to make $z$ a deterministic function $f_2$ of $\underline{w}$ and $\mathcal{H}$, as follows:

$$\underline{v} = f_1(\mathcal{G}, \underline{s}) + noise \quad ; \quad \text{and} \quad z = f_2(\mathcal{H}, \underline{w}) + noise$$

It should be noted that $\mathcal{G}$ and $\mathcal{H}$ depend both on the electromagnetic properties $C$ of the propagation medium and on the characteristics of Conversion and RF modules 120 and 160. We denote by $\mathcal{P}_A$ the characteristics of Conversion and RF module 120 of CUA 100, and by $\mathcal{P}_B$ the characteristics of Conversion and RF module 160 of CUB 200, such that $\mathcal{G}$ and $\mathcal{H}$ are deterministic functions of $\mathcal{P}_A$, $C$, and $\mathcal{P}_B$ as follows:

$$\mathcal{G} = f_3(\mathcal{P}_A, C, \mathcal{P}_B) \quad \text{and} \quad \mathcal{H} = f_4(\mathcal{P}_A, C, \mathcal{P}_B)$$

As already explained, the knowledge of the channel state $\mathcal{G}$ is particularly important for CUB to correctly detect the information transmitted by CUA. Symmetrically, CUA must have some knowledge of $\mathcal{H}$ in order to detect information transmitted by CUB. This knowledge constitutes coherent detection, and is commonly used since it yields a higher spectral efficiency, and therefore mechanisms have been developed to let CUA estimate $\mathcal{H}$ and CUB estimate $\mathcal{G}$. Therefore, it is assumed that CUA can easily get knowledge of $\mathcal{H}$, and CUB get knowledge of $\mathcal{G}$ since this constitutes the classical channel estimation process that is part of normal operations in digital communications.

In time-division duplex sytems, transmission from CUA to CUB and from CUB to CUA takes place on the same carrier frequency. It was observed that in this case, $\mathcal{G}$ and $\mathcal{H}$ are related such that adequate modeling of $f_1$ and $f_2$, and knowledge of $\mathcal{P}_A$ and $\mathcal{P}_B$ let one deduce $\mathcal{G}$ from $\mathcal{H}$ through a deterministic function as follows:

$$\mathcal{G} = f_5(\mathcal{P}_A, \mathcal{H}, \mathcal{P}_B) \quad ,$$

which constitutes an operation of relative calibration.

The invention is based on the observation that $\mathcal{P}_A$ and $\mathcal{P}_B$ have a slower evolution than $C$, since they depend on parameters such as temperature etc.. , which tend to evolve slower than the pysical properties of the channel which can be modifed by any short-range movement in the environnement.

In order to illustrate the context of the invention, it will now be considered the formal development of the functions $f_1$, $f_2$, $f_3$, $f_4$, $f_5$ in the specific situation of a narrowband flat fading communication system with multiple transmit and receive antennas.

Indeed, it can be seen that, in such a Flat Fading system, the equations which can be expressed between the different variables $\mathcal{P}_A$, $\mathcal{P}_B$, $\mathcal{G}$ and $\mathcal{H}$ are quite simple since each signal can be accurately represented by its baseband scalar complex equivalent, and most functions take the form of matrix products, as shown below. We will now describe in more detail how $f_1$ and $f_2$ can be modeled as linear functions in the flat-fading case, and present a preferred embodiment of the invention for such a case.

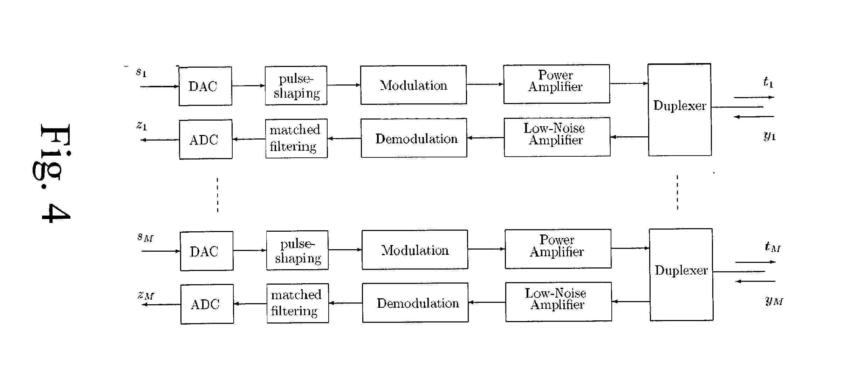

During a transmission phase of CUA, the conversion and RF module of CUA (120), represented in more detail in **Figure 4**, receives M scalar complex values $\underline{S} = (S_1,...,S_M)^T$ (one per antenna) from the signal processor A (110), converts them into their analog representations, and performs signal modulation and amplification. As it is common practice in communication engineering, we represent the radio-frequency signals passed on to the antennas by their baseband (unmodulated) equivalents $\underline{t} = (t_1...,t_M)^T$. In the flat-fading situation, the narrowband joint transformation operated by the whole conversion and RF module is modeled as a linear function $\underline{t} = D_{TA}\underline{S}$, $D_{TA}$ being a M-by-M matrix.

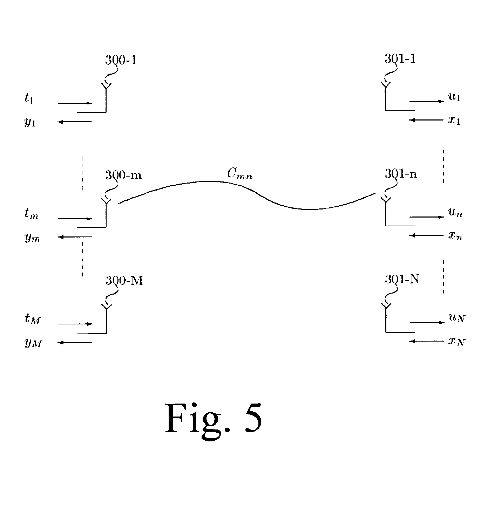

**Figure 5** represents the wireless channel between the M antennas of CUA (300-1 ... 300-M) and the N antennas of CUB (301-1 ... 301-N). When CUA transmits, each antenna 300-i (i=1...M) transmits the signal $t_i$. After propagation over the air, this induces a signal

$$u_j = \sum_{i=1}^{M} c_{ji} t_i$$ +*noise* at the output of the antenna 301-j (j=1...N) of CUB. This is expressed in a matricial way by $\underline{u} = C\underline{t}$ + *noise,* where $\underline{u} = (u_1,..., u_N)^T$ and $C = (c_{ji})_{(j,i)}$ is a N-by-M matrix. The scalar coefficients $c_{ji}$ are a characteristic of the flat-fading electromagnetic channel.

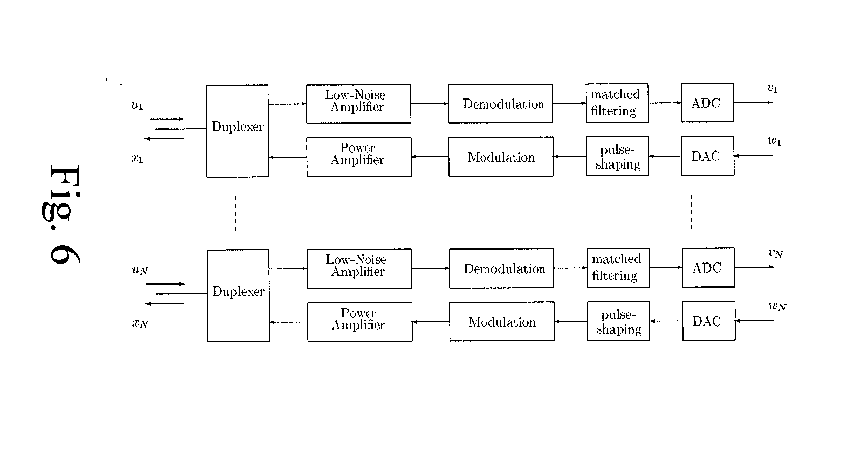

Signal $\underline{u}$ is then passed on to the Conversion and RF module of CUB, which is pictured on **Figure 6**. During the receiving phase, the duplexer of CUB connects the antennas to the low-noise amplifiers. The radio-frequency signals are amplified, converted to baseband and transformed into their digital representations $\underline{v}=v_1,...,v_N)^T$, suitable for processing by the signal processor B. The narrowband joint transformation of $\underline{u}$ into the vector $\underline{v}$ is again modeled by a linear

operation $v=D_{RB}\underline{u}$.

Gathering the equations from the paragraphs above, the transmission link from CUA to CUB is modeled as $\underline{v}$ = $G\underline{s}$ + *noise* , where $G = D_{RB}CD_{TA}$ is a N-by-M matrix. This constitutes function $f_1$ in the linear case.

We now describe the transmission from CUB to CUA, now involving elements from **Figures 6, 5 and 4**, in that order. During a transmission phase of CUB, the conversion and RF module of CUB (160) receives N values $\underline{w} = (w_1,..., w_N)^T$ from the signal processor B (170), converts them into their analog representations, and performs signal modulation and amplification. We represent the radio-frequency signals passed on to the antennas by their baseband equivalents $\underline{x} =(x_1,...,x_N)^T$. in the flat-fading situation, the narrowband joint transformation operated by the whole conversion and RF module of CUB is modeled as a linear function $\underline{x} = D_{TB}\,\underline{w}$.

When CUB transmits, each antenna 301-j (j=1...N) transmits a signal $x_j$. N After propagation over the air, this

$$\text{induces a signal } y_i = = \sum_{j=1}^{N} b_{ij} x_j + noise \text{ at the output of the antenna 300-i (i=1...M) of CUA.}$$

The channel reciprocity assumption, based on physical properties of electromagnetic waves propagation, states that if the frequency band used for transmission from CUA to CUB is the same as the frequency band used for transmission from CUB to CUA, the coupling coefficients between antenna pairs are the same in both directions, i.e. at each given instant, $b_{ij}$ = $C_{ji}$. This can be expressed in a matricial way by $\underline{y} = C^T \underline{x}$ +*noise.*

It can be assumed that if the transmission from CUA to CUB and from CUB to CUA are not strictly simultaneous, but sufficiently close in time, the reciprocity property still holds (for example because the physical properties of the propagation environment do not change significantly during a short time interval). In particular, the reciprocity property should apply to time-division duplex systems.

While CUB transmits, the duplexer of CUA connects the antennas to the low-noise amplifiers. The radio-frequency signals are amplified, converted to baseband and transformed into their digital representations $\underline{z}=(z_1,..., z_M)^T$, suitable for processing by the signal processor A. The narrowband joint transformation of $\underline{y}$ into the vector $\underline{z}$ is again modeled by a linear operation $\underline{z} = D_{RA}\underline{y}$.

Gathering the equations from the paragraphs above, the transmission link from CUB to CUA is modeled as $\underline{z}=H\underline{w}+noise,$ where $H = D_{RA}C^T D_{TB}$ is a M-by-N matrix. This constitutes function $f_2$ in the linear case.

The channel responses in both directions $G = D_{RB}CD_{TA}$ and $H=D_{RA}C^TD_{TB}$ are linked by the presence of the factor $C$. Determining $C$ from the knowledge of $G$ or $H$ would constitute an operation of absolute calibration. In the invention, the knowledge of $D_A = D_{RA}^{-T}.D_{TA}$ and $D_B =D_{RB}\,D_{TB}^{-T}$ let CUA deduce $G$ from $H$ through $G = D_B H^T D_A$, which constitutes an operation of relative calibration.

These formulas constitute a preferred embodiment of $f_3$ $(G=D_{RB}CD_{TA})$, $f_4$ $(H=D_{RA}C^TD_{TB})$, and $f_5$ $(G=D_B H^T D_A)$ in the flat-fading case. $C,G$ and $H$ respectively correspond to C,$G$ and $H$, whereas $D_A$ and $D_B$ are the instances of $P_A$ and $P_B$ in the narrowband context.

To continue the description of the general process of the invention, Figure 3 illustrates a preferred embodiment which provides the emitter of CUA with the knowledge of $G$ without requiring the continuous estimation of $G$ by CUB and continuous feedback of this information from CUB to CUA. In order to improve the clarity of the description below, the operation performed by CUA 100 are located on the left side of figure 3 while the operations handled by CUB are shown on the right side of the sheet. Transmission through the channel is represented by a dashed line. Since the process is spanned over time, it should be assumed that the electromagnetic channel $C$ does not remain constant during the whole process. However, it is assumed that the channel does not change over the length of one iteration of the loop. Therefore, we denote by $C_i$, $G_i$ and $H_i$ the respective values of $C$, $G$ and $H$ during the loop number i. $C_i$, $G_i$ and $H_i$ respectively denote the channel characteristics $C$, $G$ and $H$ during loop number i. $D_A$ and $D_B$ on the other hand, do not evolve significantly during the process.

The process starts with a <u>step 30</u> where CUA 100 generates a first training signal $S_{Ti}$ which is forwarded through the communication channel to CUB 200. This first training sequence, generally speaking, has a sufficient length and some characteristics close to white noise so that it will permit CUB 200 to estimate some parameters of the channel $G$. In addition, it should be clear that the concept of "training sequence", in the frame of the present invention, should be understood as encompassing any kind of pilot signals, pilot symbols or pilot tones which are traditionnaly in use in the field of digital communication systems or, more generally, the use of any kind of training information for the purpose of estimating at the other side the channel characteristics, such as, for instance, and without limitation, the use of cyclostationarity, finite symbols alphabets, other blind and semiblind techniques etc... Such techniques denoted under the concept of 'training' are well known to the skilled man and are not part of the present invention and they will not be further developped.

The process then proceeds to a <u>step 31</u> which corresponds to the reception by CUB 200 of the training signal, after transmission through the communication channel. As an example, using the linear model exposed above, the LM successive signals received by CUB can be represented by

$$V_{Ti} = G_i S_{Ti} + noise.$$

$V_{Ti}$ shows to be a function of $S_{Ti}$, $D_A$, $D_B$ and $C_i$ which are the coefficients of the channel at instant i. It should be noticed that the knowledge of $V_{Ti}$ and $S_{Ti}$ is classically used to estimate $G_i$.

In a <u>step 32,</u> the CUB 200 performs a channel feedback to CUA , along with the generation of a second training sequence. More concretely, CUB generates the sequence $W_{Ti}$ which is a function of the signal received:

$$W_{Ti} = f_6(V_{Ti})$$

The function $f_6$ is chosen in such a way as to permit to determine the $P_A$ and $P_B$ parameters ($D_A$ and $D_B$ in the flat-fading case) required for determining the partial contribution to the channel characteristics of the electronics transfer functions, including Conversion and RF module 120 and 160.

More particularly, the function $f_6$ is chosen in order to provide the two following effects :

Firstly, function $f_6$ comprises a second training signal which serves for the estimation of the channel $H_i$ by CUA .

Secondly, function $f_6$ comprises a feedback derived from the received signal $V_{Ti}$, so as to forward to CUA some knowledge of the $G_i$ channel.

Different possibilities are open for embodying the $f_6$ function.

In one embodiment, the feedback is based on the estimated value of $G_i$ (computed by CUB) which is simply forwarded to CUA through the normal digital communication channel. This means that the coefficients of the channel estimated by CUB are re-encoded, then modulated with the appropriate modulation constellation and then forwarded to station A.

In a second embodiment, CUB directly forwards the estimated value of $G_i$ to CUA via analog transmission.

In a third embodiment, CUB directly forwards the received sequence $V_{Ti}$ to CUA via analog transmission, so that the CUA will perform its own estimation of $G_i$.

In the preferred embodiment corresponding to the flat-fading case, the function $f_6$ is defined as the successive transmission of two sequences, $W_{Ti}^{(t)}$ and $W_{Ti}^{(G)}$ , each one performing one of the two basic functions described precedently. A first component $W_{Ti}^{(t)}$ is a training sequence used for allowing an estimation of $H_i$ while a second component $W_{Ti}^{(G)}$ is used to carry knowledge about $G_i$ back to CUA.

Different embodiments are possible for achieving that transmission from CUB to CUA. In a first embodiment, the knowledge of $G_i$, based on $V_{Ti}$ , is forwarded back to station A through the normal digital communication system. Alternatively, either an estimate of $G_i$ or the elements of $V_{Ti}$ are directly forwarded to CUA via a linear feedback loop, i.e. without quantifying and re-encoding the digital information. This has the significant advantage of greatly simplifying the realization and, further, provides good performance.

It can thus be seen that many different possibilites are open to the skilled who has the sole requirement to provide the transmission of $W_{Ti}$ as a function of $V_{Ti}$ which permits to determine the precise relationship between the transfer functions of the electronic circuitry of the modules 120 and 160. An example of the choice of $W_{Ti}^{(G)}$ , together with the corresponding treatment to apply in the next steps, will be presented later.

In a <u>step 33,</u> the second training sequence $W_{Ti}$ is received by CUA 100, and signal processor 110 receives the corresponding sequence $Z_{Ti}$.

It should be noticed that steps 30-33 should be performed in a minimum time interval in order to ensure that the close relationship between the transfer functions of the Conversion and Modules 120 and 160 - in both directions - be properly captured with negligible change of the channel properties $C$ ($C_i$ being the particular value at instant i). This time interval shall be shorter than the channel coherence time.

In a step 34 a decision is made as to whether CUA 100 has enough information to compute $P_A$, $P_B$ from the $S_{T1},..., S_{Ti}$ and $Z_{T1},..., Z_{Ti}$ in which case the process will proceed to computing step 35. If the training sequence is not sufficient to provide that estimation, then the process will proceed back to step 30 in order to generate a new training sequence as explained above, possibly after a delay, in order to ensure that the channel properties $C$ have changed.

When the process proceeds to step 35, this means that CUA has gained sufficient knowledge of the $P_A$, $P_B$ parameters from the knowledge of $Z_{T1},..., Z_{Ti}$, thus entailing to derive the close relationship between the transfer functions of modules 120 and 160, in the two directions.

From that instant, the process may enter into a new loop where the CUA 100 will constantly compute the $G_i$ channel from the estimation of the $H_i$ channel.

In a step 36, the CUB 200 transmits $W_{Ei}$ which is a classical training sequence used for permitting CUB 100 to estimate the channel $H_i$.

In a step 37, the CUB 100 receives the training sequence and, correspondingly, the signal processor 110 receives the sequence $Z_{Ei}$. Since $W_{Ei}$ is known to both the CUA and the CUB, the CUA can thus estimate the channel $H_i$ from the knowledge of $W_{Ei}$ and $Z_{Ei}$.

In a step 38, the CUA 100 computes $G_i$ from the knowledge of $W_{Ei}$, $Z_{Ei}$, $P_A$ and $P_B$. In other words, the CUA uses the relationship determined in step 35 between the transfer functions of module 120 and 160, assumed to be relatively stable, and uses such relationship for the purpose of directly computing the $G_i$ characteristics of the channel without requiring any feedback loop from CUB to CUA.

In a step 39, the process proceeds with a decision step as to determine whether $P_A$ and $P_B$ are outdated and should be recomputed by step 35 again. In a preferred embodiment this is achieved by means of a watchdog mechanism which, after expiration of a predetermined delay (such as, for instance, a few seconds) initiates back the sequence of steps 30-35.

If the decision step 39 decides that the relationship between the $P_A$ and $P_B$ parameters is still valid, then the process proceeds back to step 37 again, in order to perform a new computing loop .

The processes of steps 30-35 yielding the knowledge of $P_A$ and $P_B$ can be performed in a variety of ways. We illustrate this by providing two examples of analog feedback. In an actual application of the example, the number of transmissions (L) and the transmission powers used in the example should be adjusted. This is omitted here in order to simplify the notations.

In both cases, $S_{Ti}$ is chosen as a sequence of length LM, which can be represented as a matrix (the rows correspond to the M antennas, the columns to the LM time instants) : $S_{Ti} = 1_L \otimes I_M$ ($\otimes$ denotes a Kronecker product, $I_M$ is the MxM identity matrix, and $1_L = (1....1)$ , L ones). The signal received by CUB is therefore $V_{Ti} = G_i S_{Ti} + noise = 1_L \otimes G_i + noise.$

In the first example, CUB computes a first estimate $\widetilde{G}_i = \dfrac{1}{L} V_{Ti} (1_L^T \otimes \mathbf{I}_M)$ of $G_i$, and retransmits it L times in its analog form $W_{Ti}^{(G)} = 1_L \otimes \widetilde{G}_i$, along with a training sequence $W_{Ti}^{(t)} = 1_L \otimes I_N$ used for the estimation of $H_i$. $W_{Ti}$ is chosen as the time concatenation of two matrices: $W_{Ti} = [W_{Ti}^{(t)} : W_{Ti}^{(G)}]$, which defines $f_6$ in this example.

CUA receives $Z_{Ti} = H_i W_{Ti} + noise = [1_L \otimes H_i : 1_L \otimes H_i \widetilde{G}_i] + noise$. Denoting $Z_{Ti}^{(t)} = 1_L \otimes H_i + noise$ the first LN columns of $Z_{Ti}$, and $Z_{Ti}^{(G)} = 1_L \otimes H_i \widetilde{G}_i + noise$ the last LM columns of $Z_{Ti}$, an estimate of $H_i$ can be obtained as $\hat{H}_i =: \dfrac{1}{L} Z_{Ti}^{(t)} (1_L^T \otimes I_N)$, and an estimate $\hat{G}_i$ of $\widetilde{G}_i$ (and therefore of $G_i$) is obtained by CUA as the solution of the equation $Z_{Ti}^{(G)} = 1_L \otimes \hat{H}_i \hat{G}_i + noise.$

In the second example, CUB does not perform any computation upon reception of $V_{Ti}$, but merely retransmits it as $W_{Ti}^{(G)} = V_{Ti}$, along with a training sequence $W_{Ti}^{(t)} = 1_L \otimes I_N$. $W_{Ti}$ is chosen as the concatenation of two matrices: $W_{Ti} = [W_{Ti}^{(t)} : W_{Ti}^{(G)}]$, which defines $f_6$ in this second example.

CUA receives $Z_{Ti} = H_i W_{Ti} + noise = [1_L \otimes H_i : 1_L \otimes H_i G_i] + noise$ . As in the previous example, denoting $Z_{Ti}^{(t)} = 1_L$

$\otimes H_i$ + *noise* the first LN columns of $Z_{Ti}$, and $Z_{Ti}^{(G)}$ =$1_L \otimes H_iG_i$ + *noise* the last LM columns of $Z_{Ti}$, an estimate of $H_i$ can

be obtained as $\overset{\wedge}{H_i} = \dfrac{1}{L} Z_{Ti}^{(t)} (1_L^T \otimes I_N)$, and an estimate $\overset{\wedge}{G_i}$ of $G_i$ is obtained by CUA as the solution of the equation

$$Z_{Ti}^{(G)} = 1_L \otimes \overset{\wedge}{H_i}\overset{\wedge}{G_i} + noise .$$

Each loop through steps 30-33 yields a 2-tuple $(\overset{\wedge}{G_i}, \overset{\wedge}{H_i})$ of estimates of $(G_i, H_i)$. For each 2-tuple $(G_i, H_i)$, the

reciprocity condition $G_iD_A^{-1} = D_B H_i^{\ T}$ holds. It is possible to solve linearly for the coefficients of $(D_A^{-1}, D_B)$. There are $M^2 + N^2 -1$ unknowns to solve for (one of the coefficients can be chosen arbitrarily since multiplying $D_A$ by a scalar and $D_B$ by its reciprocal does not change the solution to the linear system. Each 2-tuple adds MN linear constraints. In case $D_A$ and $D_B$ are assumed to be diagonal, only M+N-1 unknowns need be estimated.

Once a sufficient number K of measurements have been gathered, as determined in step 34, $(D_A^{-1}, D_B)$ can be estimated as the least-squares solution $(\hat{D}_A^{-1}, \hat{D}_B)$ of the set of linear equations

$$\begin{cases} \hat{G}_1\hat{D}_A^{-1} = \hat{D}_B\hat{H}_1^{\ T} + noise \\ ... \\ \hat{G}_K\hat{D}_A^{-1} = \hat{D}_B\hat{H}_K^{\ T} + noise \end{cases}$$

Finally, as an example of implementation of step 38, CUA can first compute an estimate $\overset{\wedge}{H_i}$ of $H_i$ from the knowledge of $Z_{Ei}$, thus performing a classical channel estimation, and then compute the corresponding forward channel

state as $\overset{\wedge}{G} = \hat{D}_B \hat{H}_i^{\ T} \hat{D}_A$.

As stated before, the computations involved can be further simplified if $D_A$ and $D_B$ can be shown to be accurately modeled by diagonal matrices. This corresponds to the case where the crosstalk between antenna channels is low.

The example which was given above is well adapted to the case of narrowband flat fading channels. However, it should be clear that this is only an example of formalization of the different computations required for carrying out the process of the invention and that the skilled man will straightfowardly adapt the process described above in other situations, such as for instance, the case of frequency selective channels. In that situation, the equations will be based, not upon matrix products but on convolutions. More generally , the process of the invention, based on the two successive loops described above, is resilient to perturbations such as frequency or clock offsets, etc...

Further, it should be further noticed that the invention is particularly adapted to the Time Division Duplex where the two communication links (in the direct and reverse direction) are using the same frequency.

The invention is particularly adapted to the use of multiples antennas in a wireless communication while, conversely, the skilled man can also use it with only one antenna at each CUA and CUB. As known by the skilled man, increasing the number of emitting and receiving antennas permit the data rate to be increased.

Such computations and mathematical formulas will not be further elaborated since they are not part of the present invention.

We now give some additional implementation guidelines for the skilled man in order to operate satisfactorily the invention.

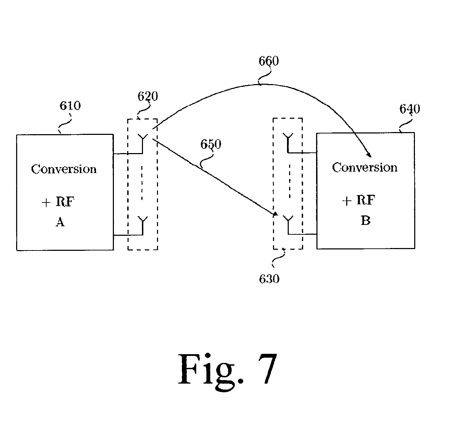

In order to ensure that the reciprocity condition truly holds, one has to make sure that the physical propagation channel in both direction is the same. Figure 7 depicts a transmission from CUA to CUB. The conversion and RF module (610) and the antenna array (620) of CUA are used to transmit, and the conversion and RF module (630) and the antenna array (640) of CUB are used to receive.

The signal (650) propagates over the transmission medium from the antenna array of CUA (620) to the antenna array of CUB (630). However, due to the low levels of the signals involved in the receiving circuitry, it is possible that the receiving circuitry of CUB (640) itself acts as an antenna, and constitutes another avenue of propagation (660). This is normally not a problem by itself and is usually ignored. However, if one seeks to exploit reciprocity, this can cause problems since this part of circuitry acting as a receive antenna does not act as a transmit antenna. For the reciprocity assumption to hold, one must ensure that the antenna parts used for communication in both directions are the same. In this case, it can be necessary to attenuate (660) in order to keep only the signal (650) to which the reciprocity property applies. This implies ensuring that CUA and CUB only communicate using their antennas, and can be achieved by proper electromagnetic shielding of the components other than the antenna arrays.

It is also important that the characteristics of the circuitry do not vary during the procedure presented in Fig 5. For instance, automatic gain control at the receiver, power control at the transmitter, and any type of frequency adjustment performed on the synthesizers, both at the transmitter or at the receiver, must remain at a fixed level, since they could affect $P_A$ or $P_B$ . If the gain of the receiver or the power of the transmitter must be adjusted, it is necessary to update the knowledge of $P_A$ or $P_B$, either by performing again steps 30-34 of the algorithm, or by computing the new values of $P_A$ or $P_B$ from the old values, using a model of the amplifiers and synthesizers involved.

Note that it is possible to use different synthesizers, e.g. for the transmit and receive modes of the same communication units, as long as the phase offset that they accumulate over a duration equal to the length of the channel delay spread is small.

Since the sampling epoch of a signal modifies its phase, it is important in the case of multiple antennas, that the signals corresponding to different antennas of the same communication unit are sampled according to the same clock signal.

**Claims**

1.  Process for determining the channel characteristics in a digital communication system comprising a first Communication Unit (CUA 100) and a second Communication Unit B (200) communicating through a transmission medium (140) ;

    - said first unit (100) including a first signal processor (110), a first conversion and RF module (120) and at least one first antenna (130);
    - said second unit (200) including a second signal processor (170), a second conversion and RF module (160) and at least one second antenna (150);
    said process being **characterized in that** it further comprises the steps of:
    - executing a first loop based on the successive transmission of a first training information generated by said first unit (100) and the retransmission of a feedback signal combined with a second training information generated by said second unit (200) back to said first unit (100) in order to let said first unit compute relationship characteristics $(P_A, P_B)$ between the transfer function of said first and second conversion and RF modules (120, 160);
    - upon completion of said first loop, executing a second loop for the purpose of continuously deriving the knowledge of the $G$ channel within the emitter of said first Unit (100) from the sole knowledge of the estimated $H$ channel together with said relationship characteristics $(P_A, P_B)$.

2.  Process in accordance with claim 1 **characterized in that** said first and said second training information are training sequences.

3.  Process according to claim 1 **characterized in that** said first loop comprises the estimation within said second unit (200) of the channel $G$ from said first training sequence, followed by a feedback of said estimation based on the quantification, re-encoding and retransmission of said information back to said first unit (100).

4.  Process according to claim 1 **characterized in that** said first loop comprises the estimation within said second unit (200) of the channel $G$ from said first training sequence, followed by a linear feedback of said estimation without requantification and re-encoding.

5.  Process according to claim 1 **characterized in that** said first loop comprises the retransmission, back to said first unit (100) of an information which includes:

    - a second training signal for allowing said first CUA (100) to estimate said channel $H$ ;
    - the analog retransmission of the signals received by said second communication unit CUB (200) upon reception of said first training signal.

6.  Process according to claim 1 **characterized in that** said first loop comprises the successive retransmission, back to first unit (100) of a second training sequence used for allowing an estimation of the channel $H$ by said first unit (100) and of the sequence of signals received by said second signal processor upon reception of said first training sequence.

7. Process according to anyone of claims 1 to 6 **characterized in that** said first loop is periodically reexecuted in order to update the knowledge of said relationship characteristics.

8. Communication apparatus including a first signal processor (110), a first conversion and RF module (120) and at least one first antenna (130) and being capable of communication with a second unit (200) including a second signal processor (170), a second conversion and RF module (160) and at least one second antenna (150) through a transmission medium (140); said apparatus being **characterized in that** it includes:

- means for executing a first loop (30-34) based on the successive transmission of a first training sequence to said second unit (200);
- means for receiving from said second unit a feedback signal combined with a second training sequence
- means for computing from said feedback signal relationship characteristics $(P_A, P_B)$ between the transfer function of said first and second conversion and RF modules (120, 160);
- means for executing a second loop (36-39) upon completion of said first loop for continuously deriving the knowledge of the $G$ channel from the sole knowledge of the estimated $H$ channel together with said relationship characteristics $(P_A, P_B)$.

9. Apparatus according to claim 8 **characterized in that** said means for receiving said feedback signal in said first loop processes said signal in accordance with the normal digital communication transmission based on quantification and decoding.

10. Apparatus according to claim 8 **characterized in that** said means for receiving said feedback signal in said first loop receives said signal in accordance with a linear digital transmission which does not comprise quantification nor encoding.

11. Apparatus according to claim 8 **characterized in that** it comprises means for receiving, within the execution of said loop, said second training sequence used for allowing an estimation of the channel $H$ by said first unit (100) and said feedback signal corresponding to the sequence of signals received by said second signal processor upon reception of said first training sequence.

12. Apparatus according to anyone of claims 8 to 11 **characterized in that** it comprises means for periodically reexecuting said first loop in order to update said relationship characteristics.

# Fig. 1

# Fig. 2

$1 \rightarrow i$

| | | |
|---|---|---|
| CUA transmits $S_{Ti}$ | 30 31 | CUB receives $V_{Ti}$ |
| CUA receives $Z_{Ti}$ | 33 32 | CUB transmits $W_{Ti}$ |

Training is sufficient ? (see text) 34 — NO : $i + 1 \rightarrow i$

YES

CUA computes $\mathcal{P}_A$ and $\mathcal{P}_B$ from the $Z_{Ti}$ — 35

CUA receives $Z_{Ei}$, 37 — CUB transmits $W_{Ei}$ 36

CUA computes $\mathcal{G}_i$ from $Z_{Ei}$, $\mathcal{P}_A$ and $\mathcal{P}_B$ — 38

$\mathcal{P}_A$, $\mathcal{P}_B$ outdated ? 39 — NO : $i + 1 \rightarrow i$

YES

# Fig. 3

Fig. 4

Fig. 5

Fig. 6

Fig. 7

European Patent Office

**EUROPEAN SEARCH REPORT**

Application Number

EP 05 36 8008

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 2003/045297 A1 (DENT PAUL W) 6 March 2003 (2003-03-06) * abstract * * page 3, paragraph 26-35 * * claims 5,13,32 * ----- | 1-12 | H04L1/24 H04B17/00 |
| A | WO 2004/040690 A (NOKIA CORPORATION; NOKIA INC; MUKKAVILLI, KRISHNA, KIRAN; SABHARWAL, A) 13 May 2004 (2004-05-13) * abstract * ----- | 1-12 | |

| | TECHNICAL FIELDS SEARCHED (Int.Cl.7) |
|---|---|
| | H04L H04B |

The present search report has been drawn up for all claims

| Place of search | Date of completion of the search | Examiner |
|---|---|---|
| The Hague | 8 August 2005 | Yang, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................................

& : member of the same patent family, corresponding document

**EP 1 701 466 A1**

## ANNEX TO THE EUROPEAN SEARCH REPORT
## ON EUROPEAN PATENT APPLICATION NO.

EP 05 36 8008

This annex lists the patent family members relating to the patent documents cited in  the above-mentioned European search report.
The members are as contained in the European Patent Office EDP file on
The European Patent Office is in no way liable for these particulars which are merely  given for the purpose of information.

08-08-2005

| Patent document cited in search report | | Publication date | Patent family member(s) | | Publication date |
|---|---|---|---|---|---|
| US 2003045297 | A1 | 06-03-2003 | WO  03021902 A1 | | 13-03-2003 |
| | | | US  2003036359 A1 | | 20-02-2003 |
| | | | US  2004203468 A1 | | 14-10-2004 |
| WO 2004040690 | A | 13-05-2004 | AU  2003290543 A1 | | 25-05-2004 |
| | | | WO  2004040690 A2 | | 13-05-2004 |

For more details about this annex : see Official Journal of the European Patent Office, No. 12/82